# EUROPEAN PATENT APPLICATION

(11) **EP 4 342 287 A1**
(43) Date of publication of application: **27.03.2024**
(21) Application number: 22425043.1
(22) Date of filing: 20.09.2022
(51) Int. Cl.: A01G 23/095

(54) **CLIMBING AND PRUNING MACHINE APPLIED IN PARTICULAR TO A TRUNK OF A TREE**

(71) Applicant: Colaianni, Tommaso, 73042 Casarano (LE) (IT)
(72) Inventor: Colaianni, Tommaso, I-73042 Casarano (LE) (IT)

(57) **Abstract**

Climbing and pruning machine (100), applied to a trunk (101) of a tree (102), said machine (100) characterized by the fact that it comprises:
- a rigid support structure (103), having a hollow cylindrical shape, and having an axis aligned with the longitudinal axis of the tree (102), so as to radially wrap the trunk (101) of the tree (102) with an opening and closing mechanism that allows installation and removal of the same machine (100); during installation the machine (100) is open with its two respective semi-cylindrical parts (104, 105) disjointed and rotated with respect to a common pivot (106), so as to pass the trunk (101) of the tree (102) in the internal hollow part of the machine (100); subsequently the two semi-cylindrical parts (104, 105) are made to rotate with respect to the common pivot (106), in such a way as to join and then be locked in a single body, by means of a proper locking element; to uninstall the machine (100) the above operations are carried out in reverse;
- a first series of arms (107a, 107b, ...), each of which consists of an extendable and amortized bar, by means of a spring mechanism or hydraulic jacks, installed on the lateral surface of the above said structure (103), with the axis directed in the radial direction towards the above said trunk (101) of the tree (102); at the ends of the arms (107a, 107b, ...) respective wheels (108a, 108b, ...) are connected such as to be placed in contact and adhering stably to the bark of the tree (102), and such as to be able to roll on it; each of the wheels (108a, 108b, ...) comprises a respective electric motor (109a, 109b, ...) and a disc brake (112a, 112b, ...) installed on its axis of rotation;
- a pruning unit (200) with a circular electric saw (113), the above said unit (200) being installed in the upper part of the rigid support structure (103), comprising an articulated mechanism for lifting, moving and orienting the cutting direction with respect to the longitudinal axis of the trunk (101) of the tree (102);
- electric and electronic means, with respective sensors and actuators, designed to: acquire electricity from a common external battery, exert a motive force of clockwise or counterclockwise rotation on the above said wheels (108a, 108b, ...), braking force of the same wheels (108a, 108b, ...), operating the above said circular electric saw (113) with respective lifting, moving and orienting mechanism, and exchanging operating data with a logic control unit.

## Description

The present invention essentially relates to a climbing and pruning machine applied to a tree trunk. The same machine was conceived and designed to be able to climb to a upper height, climbing on the bark of the tree, reaching the upper and protruding branches, and to provide their pruning, in an automated way and under the remote control of a ground operator.

The climbing machine has been designed in particular to prune the tall branches of palm trees, which are generally difficult to reach by a person, with the possibility at the same time to spray locally a nebulized liquid substance, for example an anti-parasite or a biological supplement.

In any case, the operation of the machine allows its use for any type of tall trees, which have characteristics of robustness to support the weight of a machine of this type.

As known, currently the problem of pruning tall trees is commonly faced by having an operator climbing the tree trunk, possibly using anchor belts, lifting ropes with pulleys, spiked shoes and special equipment.

Climbing tall trees to their tops, and pruning on site with power saws, or other mechanical tools, requires considerable skills for the operators. Furthermore, there is a huge safety problem, given that at those heights the anchoring systems operate on the branches and on the most fragile parts of the trees, which can sometimes be unsuitable to support the weight of a person. Furthermore, operating from below with an electric saw, and risking that the branches fall on one's own head, or those of other people below, constitutes a cause of serious danger and concern for the people involved, both those at upper height on the tree, and both those on the ground.

A possible solution is to use baskets with cranes, normally installed on special vehicles. While this possibility solves most of the risks associated with pruning at height, at the same time it requires the intervention of specialized companies with also specialized operators, and the use or rental of sophisticated machinery for lifting and maintaining the basket at the upper height from which the operations are to be carried out.

All these drawbacks have been overcome by the present invention which has as its main objective that of proposing a climbing and pruning machine, applied to a tree trunk. It must be able to autonomously ascend towards the top of the tree and autonomously descend towards the base of the tree on the basis of remote control by an operator. When the machine is at a upper height, near the branches to be cut, it must be able to activate a circular electric saw, with autonomous operation, with respective lifting, moving and orienting mechanism, always under the direction and remote control by a operator who is distant and on the ground.

Another objective is that the machine is easy to use even by non-specialized operators, thus allowing it to be used at home directly by the owners of the lands, parks or gardens, in which the trees must be pruned, and without the need of particular abilities or skills, if not those of acting on a remote control, at a distance and in complete safety, with respect to unforeseen situations and inconveniences that could occur at high altitude.

A further objective is that the machine can be assembled and disassembled quickly and easily, that it is easy to transport, and that it takes up little space, so that it can be transported inside a common motor vehicle.

Yet another objective is that the machine is particularly fast in operations, of intuitive use, effective in pruning branches one after the other, that it can be quickly repositioned, that it has articulation means such as to effectively prune branches in difficult positions, and that allows at the same time to carry out operations of diffusion of anti-parasitic substances, in particular in its application to palm trees.

Therefore, it is specific subject of the present invention a climbing and pruning machine, applied to a tree trunk, said machine characterized in that it comprises:
- a rigid support structure, having a hollow cylindrical shape, and having an axis aligned with the longitudinal axis of the tree, so as to radially wrap the trunk of the tree with an opening and closing mechanism that allows installation and removal of the same machine; during installation the machine is open with its two respective semi-cylindrical parts disjointed and rotated with respect to a common pivot, so as to pass the trunk of the tree in the internal hollow part of the machine; subsequently the two semi-cylindrical parts are made to rotate with respect to the common pivot, in such a way as to join and then be locked in a single body, by means of a proper locking element; to uninstall the machine the above operations are carried out in reverse;
- a first series of arms, each of which consists of an extendable and amortized bar, by means of a spring mechanism or hydraulic jacks, installed on the lateral surface of the above said structure, with the axis directed in the radial direction towards the above said trunk of the tree; at the ends of the arms respective wheels are connected such as to be placed in contact and adhering stably to the bark of the tree, and such as to be able to roll on it; each of the wheels comprises a respective electric motor and a disc brake installed on its axis of rotation;
- a pruning unit with a circular electric saw, the above said unit being installed in the upper part of the rigid support structure, comprising an articulated mechanism for lifting, moving and orienting the cutting direction with respect to the longitudinal axis of the trunk of the tree;
- electric and electronic means, with respective sensors and actuators, designed to: acquire electricity from a common external battery, exert a motive force of clockwise or counterclockwise rotation on the above said wheels, braking force of the same wheels, operating the above said circular electric saw with respective lifting, moving and orienting mechanism, and exchanging operating data with a logic control unit.

The present invention is now being described according to non-limiting examples, with particular reference to the figures of the enclosed drawings, where:
**Figure 1** is a front perspective view of a climbing and pruning machine, according to the present invention, in an open configuration with its two respective semi-cylindrical parts disjointed and rotated with respect to a common pivot, so as to make the trunk of a tree in the internal hollow part;
**Figure 2** is a front perspective view of the same machine of **Figure 1****,** in transparency and in a closed configuration, with the wheels turned vertically and in which the part in charge of climbing upwards or descending towards the low at the trunk of a tree is shown in detail;
**Figure 3** is a front perspective view of the same machine of **Figure 2****,** in a closed configuration, with the wheels turned vertically and in which the part in charge of climbing upwards or descending towards the low at the trunk of a tree is shown in detail;
**Figure 4** is a side perspective view of one of the arms with a wheel, extendable and cushioned, in an extended configuration, and belonging to the same machine of previous **Figures 1-3**, with the wheel turned vertically and prepared for climbing or for descending;
**Figure 5** is a side perspective view of one of the arms with an extendable and cushioned wheel, in a compressed configuration, and belonging to the same machine as the previous **Figures 1-3****,** with the wheel turned vertically and prepared for climbing or for descending;
**Figure 6** is a side perspective view of one of the arms with a wheel, extendable and cushioned, in an extended configuration, and belonging to the same machine as the previous **Figures 1-3****,** with the wheel turned horizontally and arranged for the rotation of the machine around the trunk of the tree;
**Figure 7** is a front perspective view of the same machine of **Figure 1****,** in transparency and in a closed configuration, with the wheels turned horizontally and in which the part responsible for the rotation of the machine around the trunk of the tree is shown in detail;
**Figure 8** is a side view of a tree and of the same machine of **Figure 1****,** in the step of climbing upwards in correspondence with the trunk of the same tree;
**Figure 9** is a front perspective view of the same machine of **Figure 1****,** in transparency and in a closed configuration, with the wheels turned vertically and in which the part in charge of pruning with a circular electric saw is shown in detail, with respective articulated mechanism of lifting, displacement and orientation of the cutting direction;
**Figure 10** is a front perspective view of the same machine of **Figure 1****,** in a closed configuration, and in which the part in charge of pruning with a circular electric saw is shown in detail, with respective articulated mechanism for lifting, moving and orienting the cutting direction;
**Figure 11** is a front perspective view of some branches of a tree to be pruned and of the same machine of **Figure 1**, in transparency and in a closed configuration, with the wheels turned horizontally and in which the part in charge of pruning is shown in detail with circular electric saw, with respective articulated mechanism for lifting, moving and orienting the cutting direction;
**Figure 12** is a view of a functional block diagram of an electronic circuit which manages the main components of the climbing and pruning machine according to the present invention;
**Figure 13** is a schematic side view of four phases (a), (b), (c), (d), of the movement of a wheel assembly, according to an alternative embodiment of the present invention, having a coordinated overrun mechanism of grooves and protrusions on the surface of a tree trunk, both during the climbing of the machine upwards and during the descent of the same machine downwards.

It is underlined that only few of the many conceivable embodiments of the present invention are here described, which are just some specific non-limiting examples, having the possibility to describe many other embodiments based on the disclosed technical solutions of the present invention.

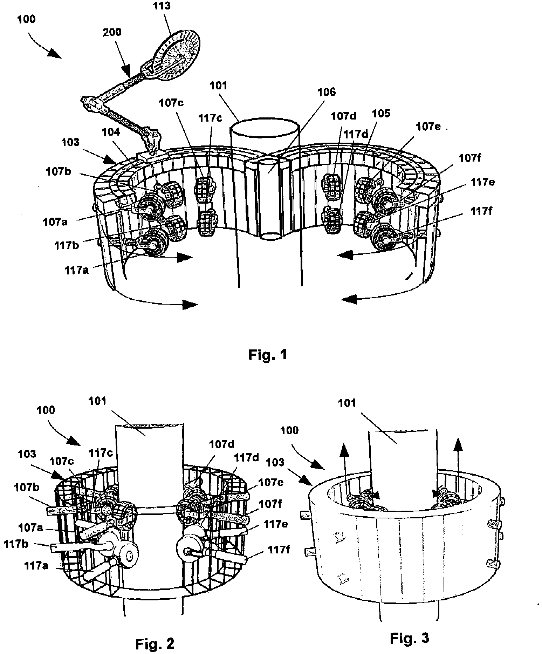

**Figures 1, 2 and 3** illustrate a climbing and pruning machine **100**, applied to a trunk **101** of a tree **102.** In **Figure 1****,** the machine **100** is in an open configuration during the installation phase, in such a way as to allow the trunk **101** of the tree **102** on the inside. In **Figures 2 and 3****,** the machine **100** is in a closed configuration, in which the trunk **101** of the tree **102** is positioned in the internal part, and the machine **100** operates in the phase of normal operation.

The machine **100** itself mainly comprises: a rigid support structure **103;** a series of arms **107a**, **107b,** ..., each of which consists of an extensible and amortized bar, to which respective wheels **108a, 108b,...,** are connected; a pruning unit **200** with a circular electric saw **113,** the above said unit **200** being installed in the upper part of the rigid support structure **103;** electric and electronic means, with respective sensors and actuators, designed to manage the operation of the machine **100.**

The rigid support structure **103** has a hollow cylindrical shape, and has an axis aligned with the longitudinal axis of the tree **102,** in such a way as to radially wrap the trunk **101** of the tree **102** with an opening and closing mechanism that allows the installation and uninstallation of the same machine **100.** During installation, the machine **100** is open with its two respective semi-cylindrical parts **104, 105** disjointed and rotated with respect to a common pivot **106,** in such a way as to make the trunk **101** pass through tree **102** in the internal hollow part of the machine **100.** Subsequently, the two semi-cylindrical parts **104, 105** are made to rotate with respect to the common pivot **106,** in such a way as to join and then be locked in a single body, by means of a proper locking element. To uninstall the machine **100**, the above operations are carried out in reverse.

The first series of arms **107a**, **107b,** ..., has each arm consisting of an extensible and amortized bar, by means of a spring or hydraulic jack mechanism, installed on the lateral surface of the above said structure **103,** with the axis directed in the radial direction. towards the aforementioned trunk **101** of the tree **102.** At the end of the arms **107a**, **107b,** ..., respective wheels **108a, 108b,** ..., are connected, such as to be placed in contact and adhering stably to the bark of the tree **102,** and such as to be able to roll on it. Each of the wheels **108a, 108b**, ..., comprises a respective electric motor **109a**, **109b**, ..., and a disc brake **112a, 112b,** ..., installed on its own axis of rotation.

The pruning unit **200** is installed in the upper part of the rigid support structure 103, it comprises a circular electric saw **113** and an articulated mechanism for lifting, moving and orienting the cutting direction with respect to the longitudinal axis of the trunk **101** of the tree **102.**

The electric and electronic means, with respective sensors and actuators, are designed to: acquire electricity from a common external battery, exert on the above said wheels **108a, 108b,** ..., a motive force of clockwise or counterclockwise rotation, exert a braking force of the same wheels **108a, 108b**, ..., to operate the above said circular, electric saw **113** with respective lifting, displacement and orientation mechanism, and to exchange operating data with a logic control unit.

As illustrated in **Figures 2, 3****,** **4, 5 and 8****,** the above said wheels **108a, 108b,** ..., placed at the end of the arms **107a, 107b,** ..., can be arranged on command in a vertical position with respect to the respective pivots **114a, 114b,** ....

In this way, their rotation in a clockwise direction, with their adherence to the bark, determines a rise in altitude of the entire machine towards the top of the tree **102.** On the contrary, their rotation in an anti-clockwise direction, with their adherence to the bark, determines a descent of the entire machine **100** towards the base of the tree **102.**

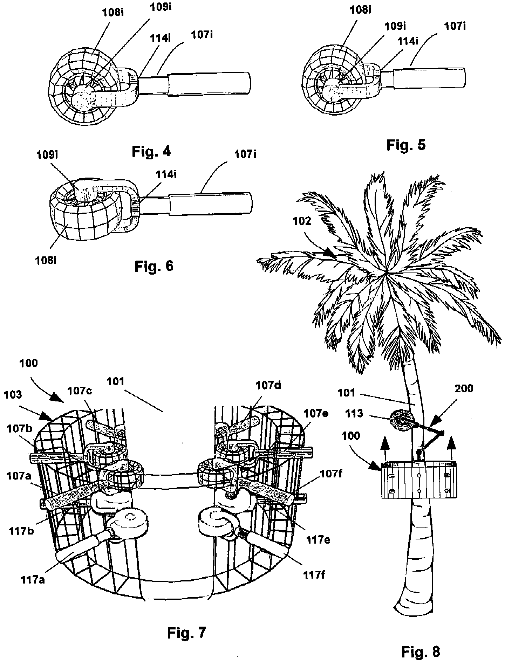

As illustrated in **Figures 6 and 7****,** the aforementioned wheels **108a, 108b**, ..., placed at the end of the arms **107a**, **107b,** ..., can be arranged on command in a horizontal position with respect to the respective pivots **114a, 114b** , ....

In this way, their rotation in a clockwise direction, with their adherence to the bark, causes a right rotation of the entire machine **100** around the trunk **101** of the tree **102.** On the contrary, their rotation in an anti-clockwise direction, with their adherence to the bark determines a left rotation of the whole machine **100** around the trunk **101** of the tree **102.**

The climbing and pruning machine **100** can comprise a second series of arms **117a, 117b,** ..., as illustrated in the examples of **Figures 1-3** **and 7.** Each arm consists of an extensible and cushioned bar, through a spring or a hydraulic jacks, installed on the lateral surface of the above said structure **103,** with the axis directed in the radial direction towards the above said trunk **101** of the tree **102.** At the end of the arms **117a, 117b,** ..., respective wheels **118a, 118b,** ..., are connected such as to be placed in contact and adhering stably to the bark of the tree **102,** and such as to be able to roll on it. Each of the wheels **118a, 118b,** ..., comprises a respective electric motor and a disc brake installed on its axis of rotation.

The above said electric and electronic means, with respective sensors and actuators, act on the respective pivots **114a, 114b,** ..., of the above said wheels **108a, 108b**, ..., placed at the ends of the arms **107a**, **107b,** ..., and/or of the above said wheels **118a, 118b,** ..., placed at the ends of the arms **117a**, **117b,** ..., in such a way as to change their position on command from horizontal to vertical, or from vertical to horizontal.

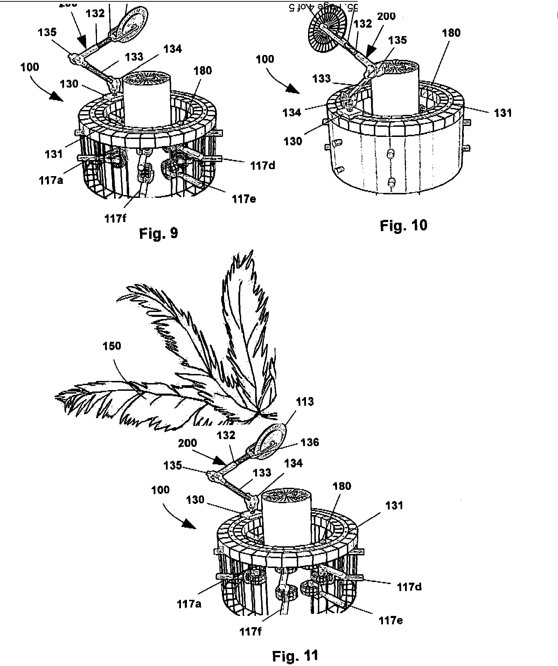

With reference to **Figures 9, 10 and 11****,** the above said pruning unit **200** is illustrated in more detail, which comprises said articulated mechanism for lifting, moving and orienting the cutting direction with respect to the longitudinal axis of the trunk **101** of tree **102.** It is consisting of: a circular electric saw **113** which in turn comprises an electric motor installed on its axis of rotation; a carriage **130** which runs along a ring track **131** obtained on the upper part of the structure **103;** a pair of articulated bars **132, 133,** connected in sequence, through respective joints **134, 135, 136,** on one side to the above said carriage **130,** and on the other side to the above said circular saw **113,** and an optional video camera positioned on the frame of the saw electric circular **113.**

In this way the same pruning unit **200** can cut in sequence the base of the respective branches **150** of the tree **102,** acting with extreme precision with regard to the position, direction and angle of cut.

The above said electrical and electronic means, with respective sensors and actuators, act on the respective joints **134, 135, 136** of the pair of bars **132, 133,** in such a way as to orient the respective components with extreme precision with regard to position, direction and cutting angle.

The climbing and pruning machine **100** can further comprise a nebulizer device **180,** which in turn comprises: a tank inside which a liquid substance is present, a nebulization and dispensing mechanism of the same liquid substance towards the outside, and electric and electronic means connected to the above said logic control unit in order to be able to carry out this dispensing on command. The liquid substance may consist of an anti-parasitic agent, a biological supplement or other substance whose diffusion on the surface of the tree may be necessary and/or appropriate.

The above said wheels **108a, 108b,** ..., and/or **118a, 118b,** ..., comprise a radial profile consisting of a material particularly adherent to the bark of a tree **102,** and which at the same time does not damage and maintain its biological and structural integrity, such as: rubber, high-adhesion plastics, non-toxic and non-dispersive chemical materials in the environment, etc.

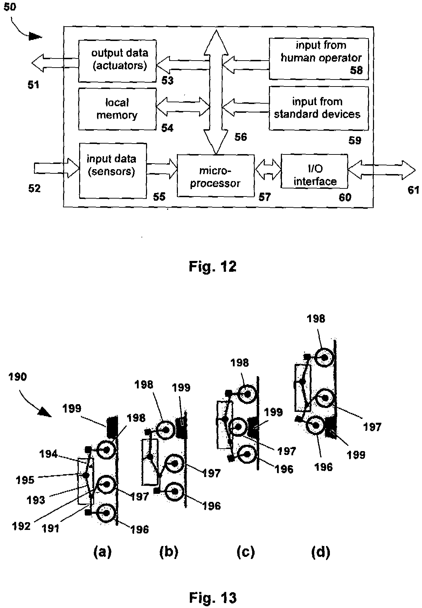

At the same time, the radial profile is constituted with a geometric shape having grooves and/or protuberances such as to increase the adhesion of the same material in dynamic rolling conditions and in environmental conditions of different temperatures and humidity. It can comprise further elements such as for example nails, blades, hooks, or metal cones, suitable for having a deinitively stable grip on the trunk **101** of a tree **102.** According to an alternative embodiment of the climbing and pruning machine **100** of the present invention, the detail of which is illustrated in **Figure 13**, each of the respective arms **107a, 107b,** ..., can have an articulated structure **190** at the end.

It in turn comprises a first pair of rigid bars **191, 192,** and a second pair of rigid bars **193, 194.** The first pair of bars **191, 192,** has at its ends the respective wheels **196, 197,** and the second pair of bars **193, 194,** has the wheel **198** at one end while at the other end it is connected to the first pair **191, 192,** through a pivot **195** which allows them to rotate with respect to the perpendicular axis.

In this way, upon contact with an obstacle **199,** the first wheel **198** progressively rises and passes over, the second wheel **197** rises and passes over, and finally the third wheel **196** rises and passes over, maintaining, according to the connection of the articulated structure **190** and the degree of freedom of rotation, a stable support point that allows the whole machine **100** to move easily overcoming the roughness, the hollows and the protrusions that may be present on the bark of the trunk **101** of a tree **102.**

With reference to **Figure 12****,** the above said logic control unit is constituted by an electronic circuit **50** which manages the main components of the climbing and pruning machine **100.**

The circuit in turn comprises: a microprocessor **57,** adapted to process data on the basis of a management software, with respective internal data transmission bus **56;** a local memory **54** in which the management software is stored in addition to the input and output data; an input interface **55** for the acquisition of data coming from the outside; an output interface **53** for transmitting data to the outside; means for managing the commands of an operator **58;** means for managing internal peripherals **59** and means for managing external peripherals **60.**

The above said management software implements an attitude control algorithm in which it acquires data from a level meter positioned on the machine **100**, from speed sensors on wheels **108a**, **108b**, ..., and/or wheels **118a**, **118b,** ..., by pressure sensors on the arms **107a, 107b,** ..., and/or arms **117a, 117b,** ..., which can be extended and cushioned, determines an automatic control action and transmits data to actuators positioned on the respective electric motors and brakes discs of the wheels **108a**, **108b,** ..., and/or wheels **118a, 118b,** ..., and to actuators for adjusting the pressure on the arms **107a**, **107b,** ..., and/or arms **117a, 117b** , ..., extendable and amortized.

The above said management software implements a control algorithm of the pruning group **200** in which it acquires data from inclination sensors positioned on the circular electric saw **113** and on the articulated bars **132, 133,** from inclination sensors on the joints **134, 135, 136,** from position sensors on the carriage **130,** from operator commands, determines an automatic control action and transmits data to actuators positioned on the respective electric motors of the circular saw **113,** to inclination actuators of the joints **134, 135, 136** which determine the position of the bars **132, 133,** and of the circular electric saw **113** and to a command for dispensing the aforementioned nebulized liquid as anti-parasitic, or liquid of another type.

In this way the same pruning unit **200** can cut in sequence the base of the respective branches **150** of the tree **102,** acting with extreme precision with regard to the position, direction and angle of the cut, and the aforementioned nebulized liquid can be sprayed locally.

The above said means for managing the commands of an operator **58** can be constituted by an external electronic device, comprising buttons, joysticks and video screen on which the images coming from the above said optional video camera are displayed, with respective systems of communication in real time with the above said control logic unit. Alternatively, the above said means for managing the commands of an operator **58** can be implemented through an APP installed on a smartphone, comprising a touchscreen on which the images coming from the above said optional video camera are displayed, and from which control actions of the operator are acquired, with respective systems of communication in real time with the above said logic control unit.

Therefore, the above examples show that the present invention reaches all the expected objectives. In particular, it permits to achieve a climbing and pruning machine, applied to a tree trunk. It is able to autonomously ascend towards the top of the tree and autonomously descend towards the base of the tree on the basis of remote control by an operator. When the machine is at a upper height, near the branches to be cut, it is able to activate a circular electric saw, with autonomous operation, with respective lifting, moving and orienting mechanism, always under the direction and remote control by a operator who is distant and on the ground.

Further according to the invention, the machine is easy to use even by non-specialized operators, thus allowing it to be used at home directly by the owners of the lands, parks or gardens, in which the trees must be pruned, and without the need of particular abilities or skills, if not those of acting on a remote control, at a distance and in complete safety, with respect to unforeseen situations and inconveniences that could occur at high altitude.

Further according to the invention, the machine can be assembled and disassembled quickly and easily, it is easy to transport, and it takes up little space, so that it can be transported inside a common motor vehicle.

Furthermore, the machine is particularly fast in operations, it is of intuitive use, effective in pruning branches one after the other, it can be quickly repositioned, it has articulation means such as to effectively prune branches in difficult positions, and allows at the same time to carry out operations of diffusion of anti-parasitic substances, in particular in its application to palm trees.

The present invention has been described by making reference to some non limiting examples and following some preferred embodiments; however it goes without saying that modifications and/or changes could be introduced by those skilled in the art without departing from the relevant scope, as defined in the enclosed claims.

## Claims

1. Climbing and pruning machine (100), applied to a trunk (101) of a tree (102), said machine (100) **characterized by** the fact that it comprises:
- a rigid support structure (103), having a hollow cylindrical shape, and having an axis aligned with the longitudinal axis of the tree (102), so as to radially wrap the trunk (101) of the tree (102) with an opening and closing mechanism that allows installation and removal of the same machine (100); during installation the machine (100) is open with its two respective semi-cylindrical parts (104, 105) disjointed and rotated with respect to a common pivot (106), so as to pass the trunk (101) of the tree (102) in the internal hollow part of the machine (100); subsequently the two semi-cylindrical parts (104, 105) are made to rotate with respect to the common pivot (106), in such a way as to join and then be locked in a single body, by means of a proper locking element; to uninstall the machine (100) the above operations are carried out in reverse;
- a first series of arms (107a, 107b, ...), each of which consists of an extendable and amortized bar, by means of a spring mechanism or hydraulic jacks, installed on the lateral surface of the above said structure (103), with the axis directed in the radial direction towards the above said trunk (101) of the tree (102); at the ends of the arms (107a, 107b, ...) respective wheels (108a, 108b, ...) are connected such as to be placed in contact and adhering stably to the bark of the tree (102), and such as to be able to roll on it; each of the wheels (108a, 108b, ...) comprises a respective electric motor (109a, 109b, ...) and a disc brake (112a, 112b, ...) installed on its axis of rotation;
- a pruning unit (200) with a circular electric saw (113), the above said unit (200) being installed in the upper part of the rigid support structure (103), comprising an articulated mechanism for lifting, moving and orienting the cutting direction with respect to the longitudinal axis of the trunk (101) of the tree (102);
- electric and electronic means, with respective sensors and actuators, designed to: acquire electricity from a common external battery, exert a motive force of clockwise or counterclockwise rotation on the above said wheels (108a, 108b, ...), braking force of the same wheels (108a, 108b, ...), operating the above said circular electric saw (113) with respective lifting, moving and orienting mechanism, and exchanging operating data with a logic control unit.

2. Climbing and pruning machine (100), applied to a trunk (101) of a tree (102), according to previous claim 1, **characterized in that**:
- the above said wheels (108a, 108b, ...) placed at the end of the arms (107a, 107b, ...) are arranged on command in a vertical position with respect to the respective pivots (114a, 114b, ...), in in such a way that their rotation in a clockwise direction, with their adherence to the bark, determines a climbing up of the entire machine (100) towards the top of the tree (102); on the contrary, their rotation in an anti-clockwise direction, with their adherence to the bark, determines a descent of the entire machine (100) towards the base of the tree (102).

3. Climbing and pruning machine (100), applied to a trunk (101) of a tree (102), according to previous claim 1, **characterized in that**:
- the above said wheels (108a, 108b, ...) placed at the end of the arms (107a, 107b, ...) are arranged on command in a horizontal position with respect to the respective pivots (114a, 114b, ...), in such that their clockwise rotation, with their adherence to the bark, causes a right rotation of the whole machine (100) around the trunk (101) of the tree (102); on the contrary, their rotation in an anti-clockwise direction, with their adherence to the bark, causes a left rotation of the whole machine (100) around the trunk (101) of the tree (102).

4. Climbing and pruning machine (100), applied to a trunk (101) of a tree (102), according to previous claim 1, **characterized in that** it comprises:
- a second series of arms (117a, 117b, ...), each of which consists of an extendable and amortized bar, by means of a spring or hydraulic jack mechanism, installed on the lateral surface of the above said structure (103), with the axis directed in the radial direction towards the above said trunk (101) of the tree (102); at the ends of the arms (117a, 117b, ...) respective wheels (118a, 118b, ...) are connected such as to be placed in contact and adhering stably to the bark of the tree (102), and such as to be able to roll on it; each of the wheels (118a, 118b, ...) comprises a respective electric motor and a disc brake installed on its axis of rotation.

5. Climbing and pruning machine (100), applied to a trunk (101) of a tree (102), according to one of the preceding claims 3 or 4, **characterized in that**:
- the above said electric and electronic means, with respective sensors and actuators, act on the respective pivots (114a, 114b, ...) of the above said wheels (108a, 108b, ...) placed at the ends of the arms (107a, 107b, ...), and/or of the above said wheels (118a, 118b, ...) placed at the ends of the arms (117a, 117b, ...), in such a way as to switch their position from horizontal to vertical on command, or from vertical to horizontal.

6. Climbing and pruning machine (100), applied to a trunk (101) of a tree (102), according to one or more of the preceding claims, **characterized in that**:
- the above said pruning unit (200) comprises said articulated mechanism for lifting, moving and orienting the cutting direction with respect to the longitudinal axis of the trunk (101) of the tree (102), consisting of: a circular electric saw (113) which in turn, it includes an electric motor installed on its rotation axis; a carriage (130) which runs along a ring track (131) formed on the upper part of the structure (103); a pair of articulated bars (132, 133) connected in sequence, through respective joints (134, 135, 136), on one side to the above said carriage (130), and on the other side to the above said circular saw (113), and a optional camera located on the frame of the circular electric saw (113),
in such a way that the same pruning unit (200) can sequentially cut the base of the respective branches (150) of the tree (102), acting with extreme precision with regard to the position, direction and angle of cut.

7. Climbing and pruning machine (100), applied to a trunk (101) of a tree (102), according to previous claim 6, **characterized in that**:
- the above said electric and electronic means, with respective sensors and actuators, act on the respective joints (134, 135, 136) of the pair of bars (132, 133) in such a way as to orient the respective components with extreme precision with respect to the position, direction and angle of cut.

8. Climbing and pruning machine (100), applied to a trunk (101) of a tree (102), according to one or more of the preceding claims, **characterized in that** it further comprises:
- a nebulizer device (180), comprising in turn a tank inside which a liquid substance is present, a nebulization and dispensing mechanism of the same liquid substance towards the outside, and electrical and electronic means connected to the above said control logic unit to be able to perform this dispensing on command; the liquid substance may consist of an anti-parasitic agent, a biological supplement or other substance whose diffusion on the surface of the tree may be necessary and/or appropriate.

9. Climbing and pruning machine (100), applied to a trunk (101) of a tree (102), according to one or more of the preceding claims, **characterized in that**:
- the above said wheels (108a, 108b, ...) and/or (118a, 118b, ...) comprise a radial profile consisting of a material particularly adherent to the bark of a tree (102), and which at the same time does not damage it and maintain its biological and structural integrity, such as: rubber, high-adhesion plastics, non-toxic and non-dispersive chemical materials in the environment, etc.; at the same time, the radial profile is constituted with a geometric shape having grooves and/or protuberances such as to increase the adhesion of the same material in dynamic rolling conditions and in environmental conditions of different temperatures and humidity, it can include further elements such as for example nails, blades, hooks, or metal cones, suitable for having a deinitively stable grip on the trunk (101) of a tree (102).

10. Climbing and pruning machine (100), applied to a trunk (101) of a tree (102), according to one or more of the preceding claims, **characterized in that**:
- each of the respective arms (107a, 107b, ...) has an articulated structure (190) at the end, comprising in turn a first pair of rigid bars (191, 192) and a second pair of rigid bars (193, 194); the first pair of bars (191, 192) has respective wheels (196, 197) at its ends, and the second pair of bars (193, 194) has the wheel (198) at one end while it is connected to the other end to the first pair (191, 192) through a pivot (195) which allows a respective rotation with respect to the perpendicular axis,
in such a way that, upon contact with an obstacle (199), the first wheel (198) progressively rises and passes over, the second wheel (197) rises and passes over, and finally the third wheel (196) rises and passes over, maintaining, according to the connection of the articulated structure (190) and the degree of freedom of rotation, a stable support point that allows the whole machine (100) to move easily overcoming the roughness, the hollows and the protuberances that can be present on the bark of the trunk (101) of a tree (102).

11. Climbing and pruning machine (100), applied to a trunk (101) of a tree (102), according to one or more of the preceding claims, **characterized in that**:
- the above said logic control unit consists of an electronic circuit (50) which manages the main components of the climbing and pruning machine (100), said circuit comprising in turn: a microprocessor (57) suitable for processing data on the basis of a management software, with respective internal bus (56) for data transmission; a local memory (54) in which the management software is stored in addition to the input and output data; an input interface (55) for the acquisition of data coming from the outside; an output interface (53) for transmitting data to the outside; means for managing the commands of an operator (58); means for managing internal peripherals (59) and means for managing external peripherals (60).

12. Climbing and pruning machine (100), applied to a trunk (101) of a tree (102), according to previous claim 11, **characterized in that**:
- the above said management software implements an attitude control algorithm in which it acquires data from a level meter positioned on the machine (100), from speed sensors on the wheels (108a, 108b, ...) and/or wheels (118a , 118b, ...), by pressure sensors on the arms (107a, 107b, ...) and/or extensible and cushioned arms (117a, 117b, ...), determines an automatic control action and transmits data to actuators positioned on the respective electric motors and disc brakes of the wheels (108a, 108b, ...) and/or wheels (118a, 118b, ...), and to actuators for adjusting the pressure on the arms (107a, 107b ,...) and/or arms (117a, 117b, ...) extendable and amortized.

13. Climbing and pruning machine (100), applied to a trunk (101) of a tree (102), according to previous claim 11 or 12, **characterized in that**:
- the above said management software implements a control algorithm of the pruning group (200) in which it acquires data from inclination sensors positioned on the circular electric saw (113) and on the articulated bars (132, 133), from inclination sensors on the joints (134, 135, 136), from position sensors on the carriage (130), from operator commands, determines an automatic control action and transmits data to actuators positioned on the respective electric motors of the circular saw (113), to inclination of the joints (134, 135, 136) which determine the position of the bars (132, 133) and of the circular electric saw (113) and to a dispensing command of the above said nebulized liquid as an anti-parasite, or liquid of another type,
in such a way that the same pruning group (200) can cut in sequence the base of the respective branches (150) of the tree (102), acting with extreme precision regarding the position, direction and angle of cut, and the above said nebulized liquid can be locally sprayed.

14. Climbing and pruning machine (100), applied to a trunk (101) of a tree (102), according to previous claim 11, 12 or 13, **characterized in that**:
- the above said means for managing the commands of an operator (58) can be constituted by an external electronic device, comprising buttons, joysticks and video screen on which the images coming from the above said optional video camera are displayed, with respective real-time communication systems with the above said logic control unit; or alternatively, the above said means for managing the commands of an operator (58) can be implemented through an APP installed on a smartphone, comprising a touchscreen on which the images coming from the above said optional video camera are displayed, and from which control actions of the operator are acquired, with respective systems of communication in real time with the above said logic control unit.

## Amended claims

### Amended claims in accordance with Rule 137(2) EPC.

1. Climbing and pruning machine (100), applied to a trunk (101) of a tree (102), said machine (100) comprising:
- a rigid support structure (103), having a hollow cylindrical shape, and having an axis aligned with the longitudinal axis of the tree (102), so as to radially wrap the trunk (101) of the tree (102) with an opening and closing mechanism that allows installation and removal of the same machine (100); during installation the machine (100) is open with its two respective semi-cylindrical parts (104, 105) disjointed and rotated with respect to a common pivot (106), so as to pass the trunk (101) of the tree (102) in the internal hollow part of the machine (100); during operations the machine (100) is closed with its two respective semi-cylindrical parts (104, 105) rotated with respect to common pivot (106), joined at their ends and locked in a single body, by means of a locking element, so as to keep the trunk (101) of the tree (102) in the internal hollow part of the machine (100);
- a first series of arms (107a, 107b, ...), each of which consists of an extendable and amortized bar, by means of a spring mechanism or hydraulic jacks, installed on the lateral surface of the above said structure (103), with the axis directed in the radial direction towards the above said trunk (101) of the tree (102); at the ends of the arms (107a, 107b, ...) respective wheels (108a, 108b, ...) are connected such as to be placed in contact and adhering stably to the bark of the tree (102), and such as to be able to roll on it; each of the wheels (108a, 108b, ...) comprises a respective electric motor (109a, 109b, ...) and a disc brake (112a, 112b, ...) installed on its axis of rotation;
- a pruning unit (200) with a circular electric saw (113), the above said unit (200) being installed in the upper part of the rigid support structure (103), comprising an articulated mechanism for lifting, moving and orienting the cutting direction with respect to the longitudinal axis of the trunk (101) of the tree (102);
- electric and electronic means, with respective sensors and actuators, designed to: acquire electricity from a common external battery, exert a motive force of clockwise or counterclockwise rotation on the above said wheels (108a, 108b, ...), braking force of the same wheels (108a, 108b, ...), operating the above said circular electric saw (113) with respective lifting, moving and orienting mechanism, and exchanging operating data with a logic control unit,
said climbing and pruning machine (100) **characterized in that**:
- the above said wheels (108a, 108b, ...) placed at the end of the arms (107a, 107b, ...) are arranged on command in a vertical position with respect to the respective pivots (114a, 114b, ...), in in such a way that their rotation in a clockwise direction, with their adherence to the bark, determines a climbing up of the entire machine (100) towards the top of the tree (102); on the contrary, their rotation in an anti-clockwise direction, with their adherence to the bark, determines a descent of the entire machine (100) towards the base of the tree (102).

2. Climbing and pruning machine (100), applied to a trunk (101) of a tree (102), according to previous claim 1, **characterized in that**:
- the above said wheels (108a, 108b, ...) placed at the end of the arms (107a, 107b, ...) are arranged on command in a horizontal position with respect to the respective pivots (114a, 114b, ...), in such that their clockwise rotation, with their adherence to the bark, causes a right rotation of the whole machine (100) around the trunk (101) of the tree (102); on the contrary, their rotation in an anti-clockwise direction, with their adherence to the bark, causes a left rotation of the whole machine (100) around the trunk (101) of the tree (102).

3. Climbing and pruning machine (100), applied to a trunk (101) of a tree (102), according to previous claim 1, **characterized in that** it comprises:
- a second series of arms (117a, 117b, ...), each of which consists of an extendable and amortized bar, by means of a spring or hydraulic jack mechanism, installed on the lateral surface of the above said structure (103), with the axis directed in the radial direction towards the above said trunk (101) of the tree (102); at the ends of the arms (117a, 117b, ...) respective wheels (118a, 118b, ...) are connected such as to be placed in contact and adhering stably to the bark of the tree (102), and such as to be able to roll on it; each of the wheels (118a, 118b, ...) comprises a respective electric motor and a disc brake installed on its axis of rotation.

4. Climbing and pruning machine (100), applied to a trunk (101) of a tree (102), according to one of the preceding claims 2 or 3, **characterized in that**:
- the above said electric and electronic means, with respective sensors and actuators, act on the respective pivots (114a, 114b, ...) of the above said wheels (108a, 108b, ...) placed at the ends of the arms (107a, 107b, ...), and/or of the above said wheels (118a, 118b, ...) placed at the ends of the arms (117a, 117b, ...), in such a way as to switch their position from horizontal to vertical on command, or from vertical to horizontal.

5. Climbing and pruning machine (100), applied to a trunk (101) of a tree (102), according to one or more of the preceding claims, **characterized in that**:
- the above said pruning unit (200) comprises said articulated mechanism for lifting, moving and orienting the cutting direction with respect to the longitudinal axis of the trunk (101) of the tree (102), consisting of: the above said circular electric saw (113) which in turn, it includes an electric motor installed on its rotation axis; a carriage (130) which runs along a ring track (131) formed on the upper part of the structure (103); a pair of articulated bars (132, 133) connected in sequence, through respective joints (134, 135, 136), on one side to the above said carriage (130), and on the other side to the above said circular saw (113), and a optional camera located on the frame of the circular electric saw (113),
in such a way that the same pruning unit (200) can sequentially cut the base of the respective branches (150) of the tree (102), acting with extreme precision with regard to the position, direction and angle of cut.

6. Climbing and pruning machine (100), applied to a trunk (101) of a tree (102), according to previous claim 5, **characterized in that**:
- the above said electric and electronic means, with respective sensors and actuators, act on the respective joints (134, 135, 136) of the pair of bars (132, 133) in such a way as to orient the respective components with extreme precision with respect to the position, direction and angle of cut.

7. Climbing and pruning machine (100), applied to a trunk (101) of a tree (102), according to one or more of the preceding claims, **characterized in that** it further comprises:
- a nebulizer device (180), comprising in turn a tank inside which a liquid substance is present, a nebulization and dispensing mechanism of the same liquid substance towards the outside, and electrical and electronic means connected to the above said control logic unit to be able to perform this dispensing on command; the liquid substance may consist of an anti-parasitic agent, a biological supplement or other substance whose diffusion on the surface of the tree may be necessary and/or appropriate.

8. Climbing and pruning machine (100), applied to a trunk (101) of a tree (102), according to one or more of the preceding claims, **characterized in that**:
- the above said wheels (108a, 108b, ...) and/or (118a, 118b, ...) comprise a radial profile consisting of a material particularly adherent to the bark of a tree (102); at the same time, the radial profile is constituted with a geometric shape having grooves and/or protuberances such as to increase the adhesion of the same material in dynamic rolling conditions and in environmental conditions of different temperatures and humidity.

9. Climbing and pruning machine (100), applied to a trunk (101) of a tree (102), according to one or more of the preceding claims, **characterized in that**:
- each of the respective arms (107a, 107b, ...) has an articulated structure (190) at the end, comprising in turn a first pair of rigid bars (191, 192) and a second pair of rigid bars (193, 194); the first pair of bars (191, 192) has respective wheels (196, 197) at its ends, and the second pair of bars (193, 194) has the wheel (198) at one end while it is connected to the other end to the first pair (191, 192) through a pivot (195) which allows a respective rotation with respect to the perpendicular axis,
in such a way that, upon contact with an obstacle (199), the first wheel (198) progressively rises and passes over, the second wheel (197) rises and passes over, and finally the third wheel (196) rises and passes over, maintaining, according to the connection of the articulated structure (190) and the degree of freedom of rotation, a support point that allows the whole machine (100) to move overcoming the hollows and the protuberances present on the bark of the trunk (101) of a tree (102).

10. Climbing and pruning machine (100), applied to a trunk (101) of a tree (102), according to one or more of the preceding claims, **characterized in that**:
- the above said logic control unit consists of an electronic circuit (50) which manages the climbing and pruning machine (100), said circuit comprising in turn: a microprocessor (57) suitable for processing data on the basis of a management software, with respective internal bus (56) for data transmission; a local memory (54) in which the management software is stored in addition to the input and output data; an input interface (55) for the acquisition of data coming from the outside; an output interface (53) for transmitting data to the outside; means for managing the commands of an operator (58); means for managing internal peripherals (59) and means for managing external peripherals (60).

11. Climbing and pruning machine (100), applied to a trunk (101) of a tree (102), according to previous claim 10, **characterized in that**:
- the above said management software implements an attitude control algorithm in which it acquires data from a level meter positioned on the machine (100), from speed sensors on the wheels (108a, 108b, ...) and/or wheels (118a , 118b, ...), by pressure sensors on the arms (107a, 107b, ...) and/or arms (117a, 117b, ...), determines an automatic control action and transmits data to actuators positioned on the respective electric motors and disc brakes of the wheels (108a, 108b, ...) and/or wheels (118a, 118b, ...), and to actuators for adjusting the pressure on the arms (107a, 107b ,. ..) and/or arms (117a, 117b, ...) extendable and amortized.

12. Climbing and pruning machine (100), applied to a trunk (101) of a tree (102), according to previous claim 10 or 11 when depending on claim 6, **characterized in that**:
- the above said management software implements a control algorithm of the pruning group (200) in which it acquires data from inclination sensors positioned on the circular electric saw (113) and on the articulated bars (132, 133), from inclination sensors on the joints (134, 135, 136), from position sensors on the carriage (130), from operator commands, determines an automatic control action and transmits data to actuators positioned on the respective electric motors of the circular saw (113), to inclination of the joints (134, 135, 136) which determine the position of the bars (132, 133) and of the circular electric saw (113) and to a dispensing command of the above said nebulized liquid as an anti-parasite, or liquid of another type,
in such a way that the same pruning group (200) can cut in sequence the base of the respective branches (150) of the tree (102), acting with extreme precision regarding the position, direction and angle of cut, and the above said nebulized liquid can be locally sprayed.

13. Climbing and pruning machine (100), applied to a trunk (101) of a tree (102), according to previous claim 10, 11 or 12, **characterized in that**:
- the above said means for managing the commands of an operator (58) are constituted by an external electronic device, comprising buttons, joysticks and video screen on which the images coming from the above said optional video camera are displayed, with respective real-time communication systems with the above said logic control unit; or alternatively, the above said means for managing the commands of an operator (58) are implemented through an APP installed on a smartphone, comprising a touchscreen on which the images coming from the above said optional video camera are displayed, and from which control actions of the operator are acquired, with respective systems of communication in real time with the above said logic control unit.
